# EUROPÄISCHE PATENTANMELDUNG

(11) **EP 2 705 745 A1**
(43) Veröffentlichungstag der Anmeldung: **12.03.2014**
(21) Anmeldenummer: 13183270.1
(22) Anmeldetag: 06.09.2013
(51) Int. Cl.: A01G 17/10

(54) **Gurt zum Anlegen an einen Gegenstand**

(30) Priorität: 07.09.2012 DE 102012108339
(71) Anmelder: Vierveijzer, Peter, 66802 Überherrn (DE)
(72) Erfinder: Vierveijzer, Peter, 66802 Überherrn (DE)
(74) Vertreter: Wolff, Matthias

(57) **Zusammenfassung**

Die Erfindung betrifft einen Gurt zum Anlegen an einen Gegenstand, insbesondere zum Halten von Ästen oder Stämmen bei der Bearbeitung von Bäumen. Der erfindungsgemäße Gurt ist gekennzeichnet durch ein Verbindungselement (2), das zumindest zwei Abschnitte (3,4,5) des Gurts (1) derart miteinander verbindet, dass es eine bei Belastung des Gurts (1) auftretende Kraft zwischen Abschnitten (3,4,5) überträgt, und das derart vorgesehen ist, dass es sich sichtbar verändert, sobald die Kraft eine bestimmte Größe erreicht. Zweckmäßigerweise ist das Verbindungselement (2) derart eingerichtet, dass es bei Erreichen der bestimmten Größe der Kraft reißt und/oder sich sein Aussehen, vorzugsweise seine Farbe, ändert. In der bevorzugten Ausführungsform ist das Verbindungselement (2) durch eine Naht und/oder eine Klebung gebildet, wobei die Abschnitte (3,4,5) vorzugsweise durch die Naht oder die Klebung derart miteinander verbunden sind, dass sie unmittelbar aneinander anliegen.

## Beschreibung

Die Erfindung betrifft einen Gurt zum Anlegen an einen Gegenstand, insbesondere zum Halten von Ästen oder Stämmen bei der Bearbeitung von Bäumen.

Durch Benutzung bekannte Gurte der eingangs genannten Art werden verwendet, um bei Schnittarbeiten an Bäumen Äste gegen Herabstürzen zu sichern. Dazu werden diese mit den Gurten umschlungen und die Gurte am Stamm des Baums befestigt. Da die Gurte bei Herabstürzen der Äste oftmals schlagartig belastet werden, ist kaum abzuschätzen, wie groß die dabei auf die Gurte wirkenden Kräfte sind. Problematisch ist insbesondere, dass durch Sichtprüfung meist nicht erkennbar ist, ob die Gurte bereits mit der vom Hersteller angegebenen Maximalkraft beaufschlagt oder sogar beschädigt worden sind und ob sie ggf. ausgetauscht werden müssen.

In gleicher Weise gilt auch, dass beim Tragen, Halten oder Heben von Lasten oder der Sicherung von Menschen mittels solcher Gurte nicht erkennbar ist, wie stark die Gurte bei ihrer Benutzung belastet worden sind.

Der Erfindung liegt die Aufgabe zugrunde, einen Gurt der eingangs genannten Art zu schaffen, der erkennen lässt, wenn er mit einer bestimmten Grenzbelastungen beaufschlagt worden ist.

Erfindungsgemäß wird diese Aufgabe gelöst durch ein Verbindungselement, das zumindest zwei Abschnitte des Gurts derart miteinander verbindet, dass es eine bei Belastung des Gurts auftretende Kraft zwischen den Abschnitten überträgt, und das derart vorgesehen ist, dass es sich sichtbar verändert, sobald die Kraft eine bestimmte Größe erreicht.

Durch Sichtprüfung nach Benutzung des Gurts kann festgestellt werden, ob der Gurt mit der Kraft der bestimmten Größe belastet worden ist. In Abhängigkeit davon kann entschieden werden, ob der Gurt weiterverwendet werden kann oder ob er ausgetauscht werden muss.

Die bestimmte Größe der Kraft kann beispielsweise der Maximalkraft entsprechen, die der Hersteller des Gurts zu dessen Verwendung vorgesehen hat. Es ist aber auch vorstellbar, für die bestimmte Größe eine kleinere Kraft als diese Maximalkraft vorzusehen. Auch wenn die von dem Hersteller vorgesehene Maximalkraft normalerweise derart festgelegt ist, dass zur Sicherheit der Gurt eine noch deutlich darüber hinausgehende Kraft aushält, kann durch eine solche Maßnahme eine zusätzliche Sicherheit erreicht werden.

Darüber hinaus nimmt das Verbindungselement durch seine Veränderung unter Wirkung der Kraft Energie auf und es schwächt somit, insbesondere bei schlagartiger Belastung, die auf den Gurt wirkende Kraft ab.

Während es vorstellbar wäre, das Verbindungselement derart vorzusehen, dass sich beim Erreichen der bestimmten Größe der Kraft sein Aussehen, insbesondere seine Farbe ändert, ist es in der bevorzugten Ausführungsform der Erfindung derart eingerichtet, dass es beim Erreichen der bestimmten Größe reißt.

In einer Ausgestaltung der Erfindung ist das Verbindungselement durch eine Naht und/oder ein Klebung gebildet. Zweckmäßigerweise sind die Abschnitte durch die Naht und/oder die Klebung derart miteinander verbunden, dass sie unmittelbar aneinander anliegen, sodass beim Erreichen der bestimmten Größe der Kraft die Abschnitte unter Aufreißen der Naht bzw. der Klebung voneinander getrennt werden. Nach Verwendung des Gurts lässt sich anhand der Sichtprüfung der Abschnitte direkt erkennen, ob auf das Seil die Kraft der bestimmten Größe eingewirkt hat.

In einer besonders bevorzugten Ausgestaltung der Erfindung umfasst die Naht und/oder die Klebung Naht- bzw. Klebeabschnitte, die bei unterschiedlich großen Belastungen reißen. Vorteilhaft lässt sich, insbesondere wenn mehrere der Naht- bzw. Klebeabschnitte vorgesehen sind und diese derart eingerichtet sind, dass sich nach ihrem Reißen bestimmen lässt, welche Kraft mindestens auf sie gewirkt hat, die Größe der Kraft, der der Gurt ausgesetzt war, genauer bestimmen. Darüber hinaus wird durch das aufeinanderfolgende Aufreißen der einzelnen Naht- bzw. Klebeabschnitte eine bessere Dämpfung erreicht.

In einer weiteren Ausgestaltung der Erfindung weist das Verbindungselement einen Materialstreifen auf, über den die Abschnitte des Gurts miteinander verbunden sind, wobei der Materialstreifen vorzugsweise kürzer ist als die Länge des Gurts zwischen den beiden Abschnitten.

Ist der Materialstreifen zumindest an einem seiner Enden mit den Abschnitten über die Naht oder die Klebung verbunden, so lässt sich wie oben bereits erläutert, durch Sichtprüfung der Naht bzw. der Klebung die Kraft beurteilen, die auf den Gurt gewirkt hat.

Ferner ist aber auch vorstellbar, den Materialstreifen selbst derart vorzusehen, dass er, sobald Kraft der bestimmten Größe auf ihn wirkt, reißt oder seine Farbe ändert.

Zweckmäßigerweise ist der Gurt im Bereich der Abschnitte gefaltet, sodass durch das Verbindungselement die Benutzung des Gurtes nicht beeinträchtigt wird.

Vorzugsweise ist der Gurt in dem Bereich mit einer Ummantelung versehen, die derart nachgiebig ist, dass sie das Verbindungselement bei seiner Veränderung unter Wirkung der Kraft nicht behindert.

In einer weiteren Ausgestaltung der Erfindung ist zwischen den Abschnitten ein Kennzeichnungsstreifen angeordnet, der nach Reißen des Verbindungselements sichtbar ist. Der Kennzeichnungsstreifen ist zweckmäßigerweise derart eingerichtet, dass bei Sichtprüfung anhand des Kennzeichnungsstreifens erkennbar ist, welche Größenordnung die Kraft hatte, die zum Greifen des Verbindungselements geführt hat.

Der Kennzeichnungsstreifen könnte dazu, eine ggf. farbliche, Skalierung aufweisen, die den Kräften entspricht, die zum Reißen der verschiedenen Naht- bzw. Klebeabschnitte nötig sind.

Zweckmäßigerweise ist das Verbindungselement in der Nähe eines Endes des Gurts bzw. in der Nähe einer Schlaufe am Ende des Gurts vorgesehen. Dadurch ist sichergestellt, dass bei Verwendung des Gurts unter Umschlingung des genannten Gegenstands das Verbindungselement nicht an dem umschlungenen Gegenstand anliegt, sondern frei angeordnet ist. Eine Anlage des Verbindungselements an dem Gegenstand kann problematisch sein, da seine Funktionsfähigkeit beispielsweise aufgrund von Reibungskräften zwischen dem Gurt und dem Gegenstand eingeschränkt sein kann. Um sicherzustellen, dass unabhängig von der Anordnung des Gurts stets ein funktionsfähiges, d.h. freies Verbindungselement zur Verfügung steht, kann der Nähe jedes Endes bzw. jeder Schlaufe ein Verbindungselement am Gurt angeordnet sein.

Sind an jedem Ende des Gurts Schlaufen gebildet, sind diese in einer Ausführungsform der Erfindung in gleicher Größe vorgesehen, vorzugsweise derart, dass sich der Gurt zur Umschlingung des Gegenstands durch jede der Schlaufen hindurchziehen lässt.

In der bevorzugten Ausführungsform der Erfindung aber ist eine der Schlaufen derart klein gebildet, dass sie zwar zur Aufnahme eines Karabiners bzw. Schäkels geeignet ist, sich durch sie aber nicht der Gurt hindurchziehen lässt. Dadurch ist für einen Benutzer des Gurts klar erkennbar, welche Schlaufe des Gurts zur Befestigung unter Umschlingung und welche zur Verbindung des Gurts mittels des Karabiners bzw. Schäkels vorgesehen ist. Es versteht sich, dass das Verbindungselement in diesem Fall in der Nähe der kleineren Schlaufe vorgesehen ist.

Zweckmäßigerweise ist die kleinere Schlaufe derart schmal vorgesehen, dass bei Aufnahme der Karabiners bzw. Schäkels dieser sich mit seinen schmaleren Seiten stets an den zum Halten von Lasten vorgesehenen schmaleren Seiten des Karabiners bzw. Schäkels anordnet.

In einer Weiterbildung der Erfindung, die einen Gurt betrifft, der nicht mit dem genannten Verbindungselement versehen sein muss, ist an einer Stelle des Gurts eine Klemmeinrichtung angeordnet, mittels derer der Gurt unter Umschlingung eines Körpers an diesem verklemmbar ist und die ein Klemmelement und ein Halteelement umfasst, die gemeinsam mit der Stelle des Gurts verbunden sind, wobei das Klemmelement zur Anordnung an dem Körper und das Halteelement zur Anordnung auf der vom Körper abgewandten Seite des Klemmelements vorgesehen ist, das Halteelement einen Halteteil aufweist, um das der Gurt herum legbar ist, und das Klemmelement mit einer Ausnehmung versehen ist, durch die ein zu dem Halteteil führender und von dem Halteteil abgehender Gurtabschnitt führbar ist, und einen Klemmabschnitt aufweist, mittels dessen die Gurtabschnitte bei Umschlingung des Körpers gegeneinander und gegen den Körper verklemmbar sind, und wobei das Halteteil einen über das Klemmteil vorstehenden Griffabschnitt umfasst, mittels dessen sich unter Wegdrücken des Halteteils von dem Klemmteil die Klemmung aufheben lässt. Vorteilhaft kann der Gurt mittels der Klemmeinrichtung an dem Körper festgespannt werden, wenn der Gurt um den Gegenstand gelegt wird. Mittels des Griffabschnitts des Halteteils lässt sich der Gurt auch dann einfach an dem Körper wieder abnehmen, wenn er unter Spannung auf dem Gegenstand aufsitzt.

Zweckmäßigerweise sind das Klemmteil und das Halteteil flach ausgebildet und sind in der Klemmeinrichtung aneinander anliegend vorgesehen, wobei das Klemmteil und das Halteteil vorzugsweise mit je einem Befestigungsabschnitt versehen sind, die zur gemeinsamen Umschlingung durch eine Schlaufe des Gurtes vorgesehen sind.

Die Erfindung wird nachfolgend anhand von Ausführungsbeispielen und der beigefügten, sich auf diese Ausführungsbeispiele beziehenden Zeichnungen näher erläutert. Es zeigen:
- Fig. 1: einen erfindungsgemäßen Gurt in Seitenansicht,
- Fig. 2 bis 6: verschiedene Ausführungsformen eines Teils des Gurtes nach Fig. 1 in Seitenansicht,
- Fig. 7: den Gurt nach Fig. 1 in Draufsicht,
- Fig. 8 und 9: verschiedene Ausführungsformen eines Teils des Gurtes nach den Fig. 1 und 7 in Draufsicht,
- Fig. 10: eine weitere Ausführungsform eines Teils des Gurtes nach Fig. 1,
- Fig. 11: einen weiteren erfindungsgemäßen Gurt in Draufsicht in Benutzung, und
- Fig. 12 und 13: Teile des Gurtes nach Fig. 11 in verschiedenen Ansichten.

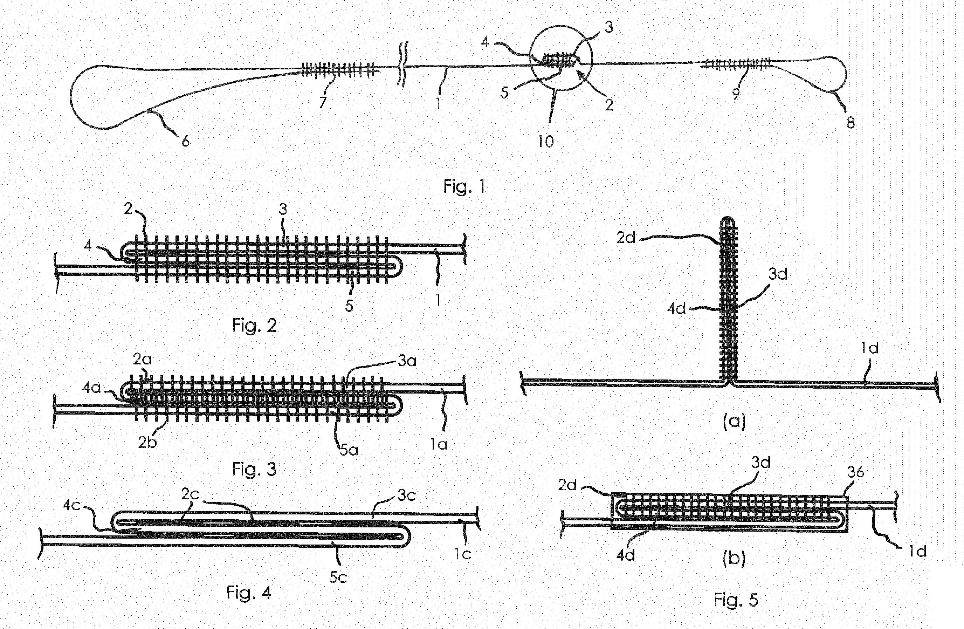

In Fig. 1 ist ein erfindungsgemäßer Gurt 1 dargestellt, an dessen Enden durch Vernähungen an den Stellen 7,9 Schlaufen 6 und 8 gebildet sind. Zur Befestigung des Gurts 1 an einem Gegenstand wird dieser mit dem Gurt 1 umschlungen und das Ende des Gurts 1 mit der kleineren Schlaufe 8 durch die größere Schlaufe 6 hindurchgezogen. Die kleinere Schlaufe 8 ist dazu vorgesehen, einen Karabiner oder einen Schäkel aufzunehmen.

Mit dem Bezugszeichen 10 ist ein Teil des Gurts 1 gekennzeichnet, für das in den Fig. 2 bis 6 verschiedene Ausführungsbeispiele gezeigt sind.

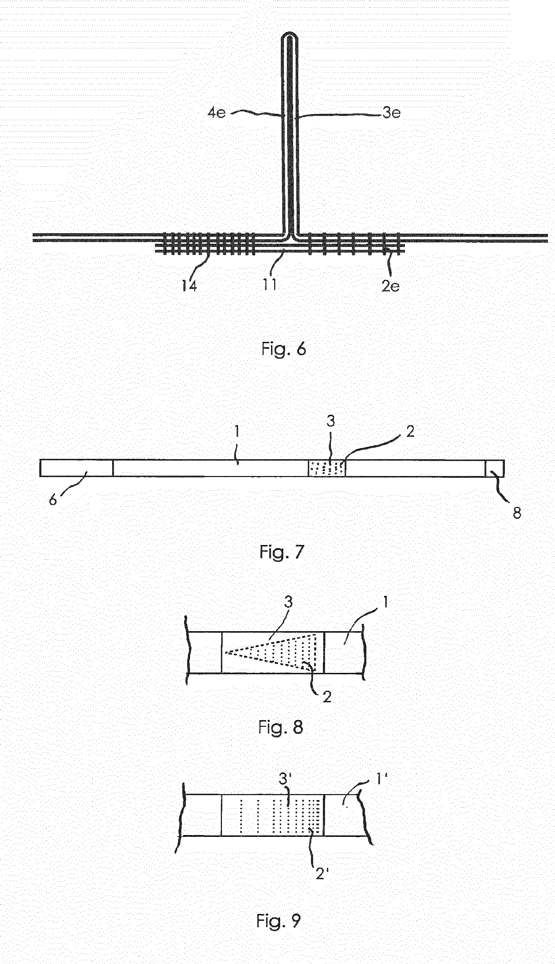

Wie Fig. 2 zeigt, ist der Gurt 1 in einem ersten Ausführungsbeispiel in Gurtabschnitten 3,4,5 der Länge nach gefaltet und die Gurtabschnitte 3,4,5 sind durch Nähte 2 miteinander verbunden. Wie den Fig. 7 bis 9 zu entnehmen ist, können die Nähte 2 über die Länge der Gurtabschnitte 3,4,5 gleichbleibend oder über die Länge veränderlich vernäht sein.

Bei dem Ausführungsbeispiel nach den Fig. 1 und 2 ist der Gurt 1 vom Hersteller für eine Maximalbelastung mit einer auf Zugkraft von 5 t vorgesehen. Die Nähte 2 sind derart eingebracht, dass sie sich bei einer Zugbelastung des Gurts 1 von 3 t öffnen. Wird der Gurt 1 mit einer Belastung von 3 t oder mehr belastet, reißen die Nähte 2 nach und nach auf und nehmen dabei auf den Gurt wirkende Energie auf. Gleichzeitig entfaltet sich der Gurt 1 in den Gurtabschnitten 3 bis 5, sodass nach Benutzung des Gurts 1 bei Sichtprüfung an der Stelle der Gurtabschnitte 3 bis 5 direkt erkennbar ist, dass der Gurt 1 mit mindestens 3 t belastet worden ist.

Es wird nun auf die Fig. 2 bis 13 Bezug genommen, wo gleiche oder gleichwirkende Teile mit derselben Bezugszahl wie in den Fig. 1 und 2 bezeichnet sind und der betreffenden Bezugszahl jeweils ein Buchstabe beigefügt ist.

Der Gurt 1 a gemäß Fig. 3 unterscheidet sich von demjenigen nach Fig. 2 dadurch, dass Gurtabschnitte 3a,4a,5a nicht insgesamt miteinander vernäht sind, sondern die Nähte 2a,2b lediglich zwischen den Gurtabschnitten 3a und 4a bzw. 4a und 5a vorgesehen sind. Eine solche Nahtanordnung erweist sich insbesondere dann als vorteilhaft, wenn die Nähte 2a,2b, wie in den Fig. 8 und 9 gezeigt, veränderlich vorgesehen sind. Ist beispielsweise eine dreiecksförmige Vernähung 2f (Fig. 8) für die Nähte 2a vorgesehen derart, dass die schmalere Dreiecksseite der Nähte 2a auf der offenen, auf der Abbildung rechten Seite der Nähte 2a zwischen den Gurtabschnitten 3a und 4a vorgesehen ist, und zwischen den Gurtabschnitten 4a und 5a die Nähte 2b derart vorgesehen sind, dass die schmalere Dreiecksseite auf der offenen, in der Fig. 3 linken Seite der Nähte 2b vorgesehen ist, öffnen sich die Nähte 2a,2b zunächst an den genannten schmaleren Dreiecksseiten. Wie weit die Nähte 2a,2b aufreißen, hängt ab von der Größe der auf den Gurt 1 a wirkenden Belastung.

Die Nähte 2a,2b können derart vorgesehen sein, dass sie auf der schmaleren Dreiecksseite bei einer Belastung von 3 t beginnen, sich zu öffnen, die Nähte 2a,2b sich bei einer Belastung von 3,5 t bis zur Mitte des Dreiecks hin öffnen und sich die Nähte 2a,2b erst bei einer Belastung mit 4 t vollständig öffnen. Auf diese Weise kann anhand der Nähte 2a,2b nach Benutzung des Gurtes 1 a festgestellt werden, welche Größenordnung die Kraft hatte, die auf den Gurt 1a gewirkt hat.

Das Ausführungsbeispiel nach Fig. 5 unterscheidet sich von den vorherigen Ausführungsbeispielen dadurch, dass ein Gurt 1 d lediglich in Gurtabschnitten 3d,4d aneinandergelegt und mittels Nähten 2d verbunden ist. Es versteht sich, dass die Nähte 2d, wie oben anhand der Fig. 7 bis 9 beschrieben, auch hier veränderlich vernäht sein können. Um zu vermeiden, dass die Gurtabschnitte 3d,4d von dem Gurt 1 d abstehen, ist eine Umhüllung 36 vorgesehen, die die Gurtbereiche 3d,4d flach an dem Gurt 1 d hält. Die Plastikumhüllung 36 ist dazu zweckmäßigerweise derart ausgebildet, dass sie bei einer Belastung, die zur Öffnung der Nähte 2d führt, aufreißt.

Fig. 4 zeigt ein Ausführungsbeispiel, bei dem Gurtabschnitte 3c,4c,5c anstatt durch die Nähte 2a,2b,2d durch Klebungen 2c miteinander verbunden sind. Die Klebungen 2c können in analoger Weise veränderlich vorgesehen sein, wie das in den Fig. 7 bis 8 gezeigt ist, und eignen sich auch zur Verbindung des Gurts 1 c nach der in Fig. 5 gezeigten Anordnung.

Bei einem weiteren erfindungsgemäßen Gurt 1 e nach Fig. 6 ist ein Verbindungselement durch einen Gurtabschnitt 11 gebildet, der durch Nähte 14 und 2e mit dem Gurt 1 e verbunden ist. Zwischen den Nähten 14 und 2e ist der Gurt 1 e in Gurtabschnitte 3e,4e gefaltet, allerdings ohne diese durch Klebung oder Nähte miteinander zu verbinden. Die Nähte 14 sind derart stark vorgesehen, dass sie sich auch bei großer Belastung des Gurts 1 e nicht auftrennen. Die Nähte 2e dagegen sind, wie bei den oben beschriebenen Ausführungsbeispielen derart eingerichtet, dass sie sich bei einer bestimmten Grenzbelastung des Gurts auftrennen. Bei Sichtprüfung des Gurts 1 e lässt sich einfach an den Nähten 2e erkennen, ob der Gurt 1 e bereits mit der Grenzbelastung belastet worden ist. Auch die Nähte 2e können, wie in den Fig. 7 bis 9 gezeigt, veränderlich vorgesehen sein.

In einem weiteren Ausführungsbeispiel könnte der Gurtabschnitt 11 des Gurtes 1 e nach Fig. 6 derart eingerichtet sein, dass er bei der Grenzbelastung reißt oder sich, ggf. unter Änderung seiner Farbe, verformt. In diesem Fall sind beide Nähte 2e,14 derart widerstandsfähig gebildet, dass sie bei der Grenzbelastung nicht reißen.

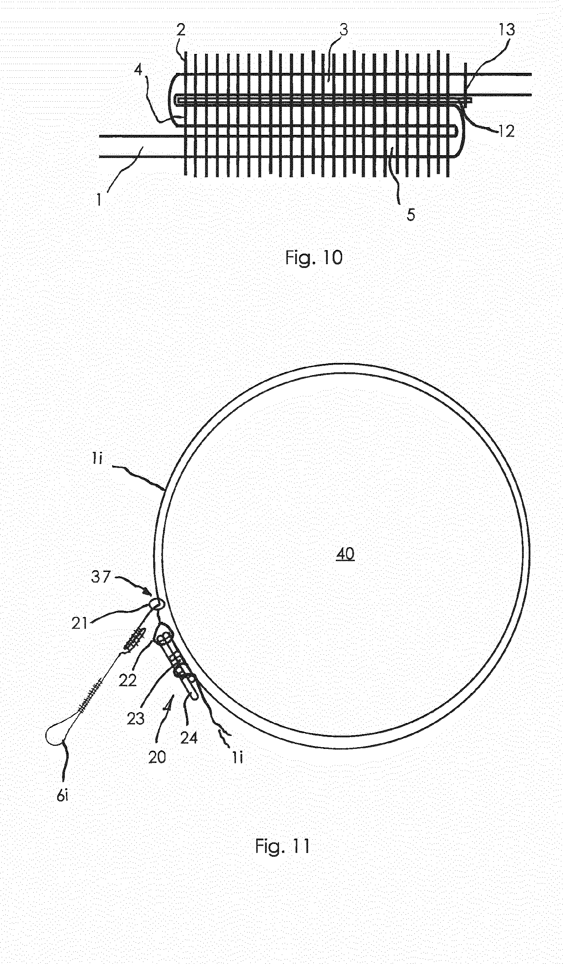

Ferner könnte, wie in Fig. 10 gezeigt, zur Vereinfachung der Sichtprüfung zwischen Gurtabschnitten 3,4,5 ein Kennzeichnungsstreifen oder-band 12 angeordnet sein, dass über eine gesonderte Naht 13 mit dem Gurt 1 verbunden ist. Das Kennzeichnungsband bzw. der Kennzeichnungsstreifen 12 können in einer Signalfarbe vorgesehen sein und oder mit einer Skala versehen sein, anhand derer sich die Belastung des Gurts 1 in Abhängigkeit von der Weite mit der Nähte 2 aufgerissen sind, ablesen lassen. Der Kennzeichnungsstreifen bzw. das Kennzeichnungsband 12 können auch zwischen den Gurtabschnitten 3,4,5 bis 3e,4e nach den Fig. 2 bis 6 vorgesehen sein.

Fig. 11 zeigt einen weiteren erfindungsgemäßen Gurt 1i bei Umschlingung eines Gegenstands, beispielsweise eines Baums 40. Der Gurt 1i ist an seinem einen Ende mit einer Schlaufe 6i versehen und weist in der Nähe der Schlaufe 6i einen, der oben beschriebenen Abschnitte 10 auf. An einer Stelle 37 ist der Gurt 1 i durch ein Ringelement 21 geführt, der über einen Verbindungsgurt 22 mit einer Klemmeinrichtung 20 verbunden ist, die das andere Ende des Gurts 1i aufnimmt.

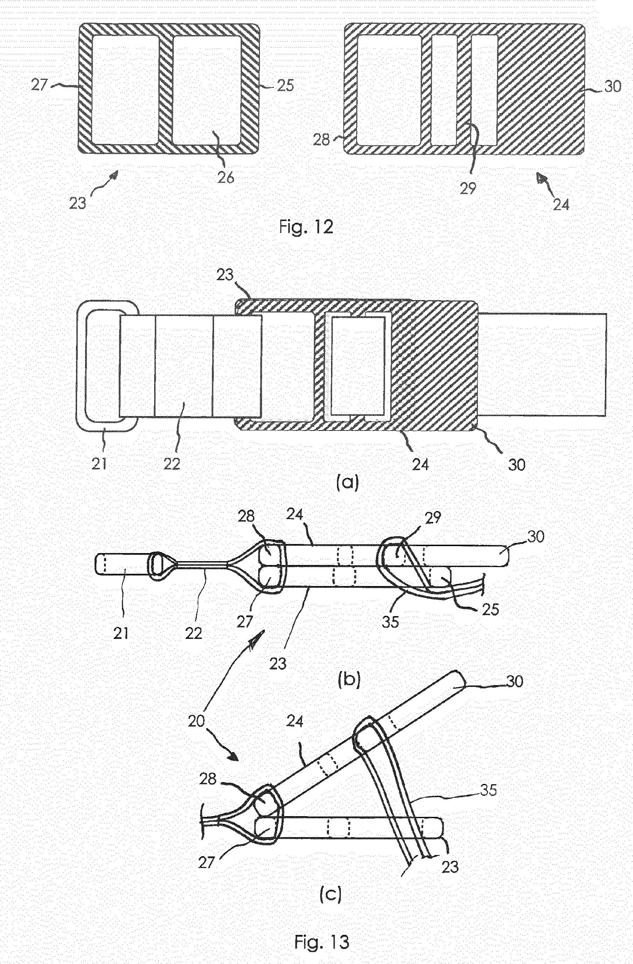

Wie insbesondere den Figuren 12 und 13 zu entnehmen ist, umfasst die Klemmeinrichtung 20 ein Klemmteil 23 und ein Halteteil 24, wobei das Klemmteil 23 dem Baum 40 zugewandt und das Halteteil 24 dem Baum abgewandt angeordnet ist. Das Halteteil 24 und das Klemmteil 23 sind über Befestigungsabschnitte 27,28, die durch eine Schlaufe des Verbindungsgurts 22 umschlungen sind, aneinander gehalten.

Um den Gurt 1 i an dem Baum 40 zu verklemmen, wird das eine Ende des Gurts 1 i, wie in Fig. 13b gezeigt, zunächst durch eine Ausnehmung 26 des Klemmteils 23, anschließend über einen Haltesteg 29 des Halteelements 30 und von dort wieder zurück durch die Ausnehmung 26 unter einen Klemmabschnitt 25 des Klemmteils geführt. Wird der Gurt 1 i nun bei Belastung an der Schlaufe 6i unter Spannung gesetzt, drückt das Halteteil 24 unter Krafteinwirkung des um den Halteabschnitt 29 geführten Gurtabschnitts 35 auf das Klemmteil 23. Dabei presst der Klemmabschnitt 25 des Klemmteils 23 den Gurt 1i an beiden Enden des Gurtabschnitts 35 den Gurt 1 i gegen den Baum 40. Der Gurt 1 i sitzt dann unter der Belastung am Baum 40 fest.

Wie Fig. 13c zu entnehmen ist, lässt sich die Verklemmung des Gurts 1 i an dem Baum einfach dadurch aufheben, dass das Halteteil 24 an seinem Griff 30 gegriffen und einseitig von dem Klemmteil 23 weggezogen wird. Die Klemmung des Gurts 1i am Baum 40 ist dann aufgehoben und der Gurt 1 i lässt sich ohne Schwierigkeiten vom Baum 40 abnehmen.

## Patentansprüche

1. Gurt zum Anlegen an einen Gegenstand, insbesondere zum Halten von Ästen oder Stämmen bei der Bearbeitung von Bäumen, **gekennzeichnet durch** ein Verbindungselement (2), das zumindest zwei Abschnitte (3,4,5) des Gurts (1) derart miteinander verbindet, dass es eine bei Belastung des Gurts (1) auftretende Kraft zwischen den Abschnitten (3,4,5) überträgt, und das derart vorgesehen ist, dass es sich sichtbar verändert, sobald die Kraft eine bestimmte Größe erreicht.

2. Gurt nach Anspruch 1,
**dadurch gekennzeichnet,**
**dass** das Verbindungselement (2) derart eingerichtet ist, dass es beim Erreichen der bestimmten Größe der Kraft reißt und/oder sich sein Aussehen, vorzugsweise seine Farbe, ändert.

3. Gurt nach Anspruch 1 oder 2,
**dadurch gekennzeichnet,**
**dass** das Verbindungselement (2) durch eine Naht und/oder eine Klebung gebildet ist.

4. Gurt nach Anspruch 3,
**dadurch gekennzeichnet,**
**dass** die Abschnitte (3,4,5) durch die Naht und/oder die Klebung derart miteinander verbunden sind, dass sie unmittelbar aneinander anliegen.

5. Gurt nach einem der Ansprüche 1 bis 4,
**dadurch gekennzeichnet,**
**dass** der Gurt (1) im Bereich der Abschnitte (3,4,5) gefaltet ist.

6. Gurt nach einem der Ansprüche 1 bis 5,
**dadurch gekennzeichnet,**
**dass** die Naht und/oder die Klebung verschiedene Naht- bzw. Klebeabschnitte umfasst, die bei unterschiedlich großen Kräften reißen.

7. Gurt nach einem der Ansprüche 1 bis 6,
**dadurch gekennzeichnet,**
**dass** das Verbindungselement (2) einen Materialstreifen (11) aufweist über den die Abschnitte (3,4) des Gurts (1) verbunden sind.

8. Gurt nach einem der Ansprüche 1 bis 7,
**dadurch gekennzeichnet,**
**dass** zwischen den Abschnitten (3,4,5) ein Kennzeichnungsstreifen (12) angeordnet ist, der nach Reißen des Verbindungselements (2) sichtbar ist und der Kennzeichnungsstreifen (12) vorzugsweise derart eingerichtet ist, dass erkennbar ist, welche Größenordnung die Kraft hatte, die zum Reißen des Verbindungselements (2) geführt hat.

9. Gurt zum Anlegen an einen Gegenstand, insbesondere nach einem der Ansprüche 1 bis 8,
**dadurch gekennzeichnet,**
**dass** an einer Stelle (36) des Gurtes (1 i) eine Klemmeinrichtung (20) angeordnet ist, mittels derer der Gurt (1i) unter Umschlingung eines Körpers (40) an diesem verklemmbar ist und die ein Klemmelement (23) und ein Halteelement (24) umfasst, die gemeinsam mit der Stelle (36) des Gurtes (1 i) verbunden sind, wobei das Klemmelement (23) zur Anordnung an dem Körper (40) und das Halteelement (24) zur Anordnung auf der vom Körper (40) abgewandten Seite des Klemmelements (23) vorgesehen ist, das Halteelement (24) ein Halteteil (31) aufweist, um das der Gurt (1 i) herum legbar ist, und das Klemmelement (23) mit einer Ausnehmung (26) versehen ist, durch die ein zu dem Halteteil (31) führender und von dem Halteteil (31) abgehender Gurtabschnitt (35) führbar ist, und einen Klemmabschnitt (23) aufweist, mittels dessen die Gurtabschnitte (35) bei Umschlingung des Körpers (40) gegeneinander und gegen den Körper (40) verklemmbar sind, und wobei das Halteteil (24) einen über das Klemmteil (23) vorstehenden Griffabschnitt (30) umfasst, mittels dessen sich unter Wegdrücken des Halteteils (24) von dem Klemmteil (23) die Klemmung aufheben lässt.

10. Gurt nach Anspruch 9,
**dadurch gekennzeichnet,**
**dass** der das Klemmteil (23) und das Halteteil (24) flach ausgebildet und zur Anordnung aneinander vorgesehen sind.
